# FASCICULE DE BREVET EUROPEEN

(11) **EP 3 983 244 B1**
(45) Date de publication et mention de la délivrance du brevet: **10.05.2023**
(21) Numéro de dépôt: 20737253.3
(22) Date de dépôt: 19.05.2020
(51) Int. Cl.: B60G 7/02

(54) **GUIDE DE MONTAGE POUR UNE BARRE PANHARD DE VEHICULE AUTOMOBILE**
MONTAGEFÜHRUNG FÜR EINEN PANHARD-STAB EINES KRAFTFAHRZEUGS
MOUNTING GUIDE FOR A MOTOR VEHICLE PANHARD BAR

(30) Priorité: 14.06.2019 FR 1906367
(43) Date de publication de la demande: 20.04.2022
(73) Titulaire: PSA Automobiles SA, 78300 Poissy (FR)
(72) Inventeur: MINISINI, Antoine, 25230 SELONCOURT (FR); MARCONOT, Pascal, 90140 BREBOTTE (FR)
(86) Numéro de dépôt international: PCT/FR2020/050832
(87) Numéro de publication internationale: WO 2020/249881

(56) Documents cités:
- JP-A- H11 165 518
- JP-A- S58 214 476
- US-A1- 2011 018 218

## Description

La présente invention porte sur un guide de montage pour une barre Panhard de véhicule automobile.

De façon connue en soi, un essieu souple de véhicule automobile comporte deux bras oscillants longitudinaux portant chacun une roue à une de leurs extrémités. Ces bras oscillants sont montés pivotant à leur autre extrémité par rapport à la caisse du véhicule autour d'un axe parallèle à l'axe des roues arrière.

Des moyens élastiques amortisseurs prenant appui sur les bras à proximité des roues soutiennent élastiquement la caisse et une barre transversale, ou traverse, anti-dévers élastiquement déformable en torsion est rigidement reliée par ses extrémités aux deux bras. Pour des raisons de reprise d'efforts et de guidage latéral du train arrière dans ses mouvements de suspension, une barre dite barre Panhard est disposée dans un plan sensiblement horizontal proche de l'axe de rotation des roues arrière, et relie l'un des bras à la caisse du véhicule.

On utilise généralement un clip de fixation ayant uniquement une fonction de butée verticale pour le montage de la barre Panhard. La pièce réalisée en plastique est fixée sur la caisse par encliquetage.

Lors du montage du train, la barre Panhard est fixée à la caisse du véhicule après les bras oscillants, si bien qu'elle doit compenser les dispersions dimensionnelles liées à l'assemblage du train à la caisse. La barre Panhard doit donc être montée sous effort pour faire coïncider une articulation avec une interface de fixation correspondante d'une pièce structurelle de soubassement.

Les clips de fixation existants ne garantissent toutefois pas la tenue mécanique suivant une direction transversale, de sorte qu'il existe un risque important de décrochage du clip de fixation lors du montage sous effort de la barre Panhard.

Le document JP S58 214476 divulgue un guide de montage pour une barre Panhard, selon le préambule de la revendication 1.

Les documents JP H11 165518 et US 2011/018218 divulguent d'autres guides de montage pour une barre Panhard.

L'invention vise à remédier efficacement à cet inconvénient en proposant un guide de montage pour une barre Panhard comportant:
- un corps réalisé dans un matériau plastique ouvert en partie inférieure pour le passage de la barre Panhard, ledit corps étant muni de moyens d'indexage en position de la barre Panhard, et
- un insert réalisé dans un matériau métallique disposé dans la partie supérieure du corps, ledit insert comportant une ouverture traversante pour le passage d'un organe de fixation destiné à assurer une fixation du guide sur une pièce structurelle de soubassement de véhicule automobile.

L'invention permet ainsi de lier rigidement le guide de montage de la barre Panhard à la caisse par assemblage vissé. L'invention garantit donc la tenue mécanique du guide lors du montage sous effort de la barre Panhard. Le guide de montage pourra en outre remplacer d'éventuels points de soudure électrique ou constituer un ancrage robuste pour la fixation de fonctions annexes.

Selon une réalisation, le corps est surmoulé sur l'insert.

Selon une réalisation, l'insert est serti sur le corps.

Selon une réalisation, les moyens d'indexage en position comportent une découpe ménagée dans un flanc correspondant du corps sur laquelle est destinée à venir en appui une articulation de la barre Panhard.

Selon une réalisation, la découpe présente une forme évasée. Cela permet de compenser progressivement les dispersions dimensionnelles de montage du train.

Selon une réalisation, le guide de montage comporte des moyens de pré-maintien sur la pièce structurelle de soubassement.

Selon une réalisation, les moyens de pré-maintien comportent un ergot de positionnement et/ou une patte d'encliquetage.

L'invention concerne en outre un ensemble pour véhicule automobile comportant une barre Panhard, une pièce structurelle de soubassement, et un guide de montage tel que précédemment défini fixé sur la pièce structurelle de soubassement.

L'invention concerne également un véhicule automobile comportant un ensemble tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une vue en perspective d'une barre Panhard et d'un guide de montage selon l'invention fixé sur une pièce de soubassement d'un véhicule automobile montrée en coupe longitudinale;
[Fig. 2] La figure 2 est une vue en perspective éclatée de la pièce de soubassement, d'un guide de montage selon l'invention, et d'une vis de fixation pour fixer le guide de montage sur la pièce de soubassement;
[Fig. 3] La figure 3 est une vue en perspective éclatée de la barre Panhard, d'un guide de montage selon l'invention, et d'une vis de fixation pour fixer l'articulation de la barre Panhard à la pièce de soubassement;
[Fig. 4] La figure 4 est une vue en perspective d'un guide de montage pour une barre Panhard selon l'invention muni d'un corps surmoulé sur un insert métallique;
[Fig. 5a] La figure 5a est une vue en perspective illustrant une étape de sertissage d'un insert sur le corps en plastique d'un guide de montage pour une barre Panhard selon l'invention;
[Fig. 5b] La figure 5b est une vue en perspective d'un guide de montage pour une barre Panhard selon l'invention muni d'un insert serti sur le corps réalisé en matériau plastique.

Les éléments identiques, similaires, ou analogues conservent la même référence d'une figure à l'autre.

Les termes relatifs de type "supérieur", "inférieur", "horizontal", "vertical" sont entendus par référence à un guide de montage monté sur la caisse du véhicule en position d'utilisation. Par ailleurs, l'axe X correspond à l'axe longitudinal du véhicule, l'axe Y correspond à un axe transversal perpendiculaire à l'axe X et se trouvant dans le plan horizontal. L'axe Z est un axe vertical perpendiculaire au plan formé par les axe X et Y.

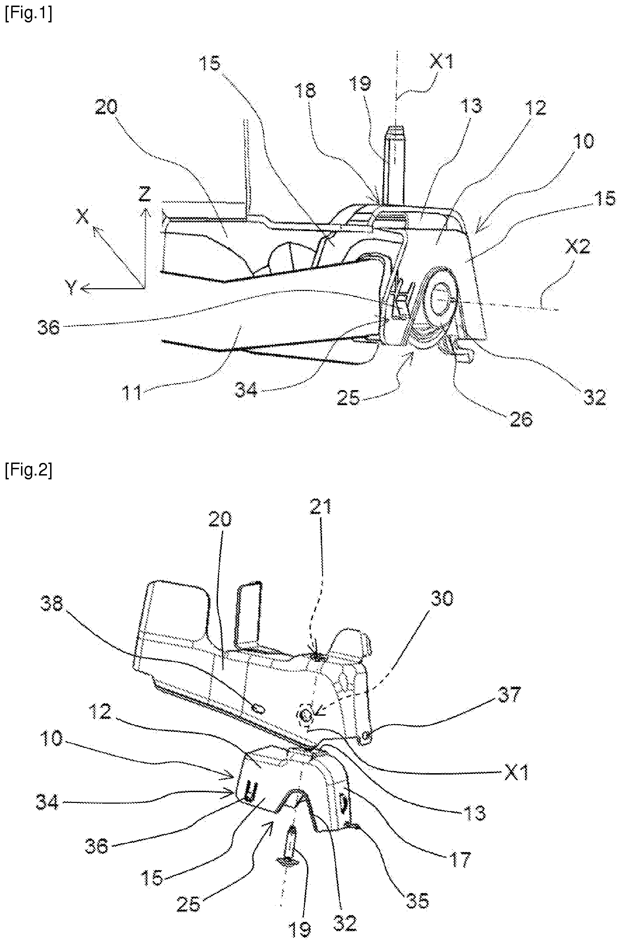

La figure 1 montre un guide de montage 10 pour une barre Panhard 11 comportant un corps 12 et un insert 13. Le corps 12 est réalisé dans un matériau plastique. Le corps 12 est ouvert en partie inférieure pour le passage de la barre Panhard 11. La barre Panhard 11 est disposée dans un plan sensiblement horizontal proche d'un axe de rotation des roues arrière, et relie un bras du train arrière à la caisse du véhicule.

En l'occurrence, comme on peut le voir sur les figures 2, 3, et 4, le corps 12 du guide 10 comporte deux flancs latéraux 15 reliés entre eux par une paroi de liaison 17. Le corps 12 délimite ainsi un espace ouvert vers le bas et du côté opposé à la paroi de liaison 17. Le corps 12 est orienté suivant la direction transversale Y du véhicule suivant laquelle s'étend longitudinalement la barre Panhard 11.

L'insert 13 est réalisé avantageusement dans un matériau métallique. L'insert 13 est disposé dans la partie supérieure du corps 12. L'insert 13 comporte une ouverture traversante 18 pour le passage d'un organe de fixation 19 destiné à assurer une fixation du guide 10 sur une pièce structurelle de soubassement 20 du véhicule automobile. La pièce de soubassement 20 est par exemple un petit longeron creux situé en partie basse de la caisse du véhicule. L'axe X1 de l'ouverture traversante 18 s'étend suivant la direction verticale Z. L'organe de fixation 19 est de préférence une vis destinée à coopérer avec une interface de fixation, tel qu'un écrou 21 intégré dans la pièce de soubassement 20 (cf. figure 2). La tête de la vis est destinée à venir en appui sur la face intérieure de l'insert 13.

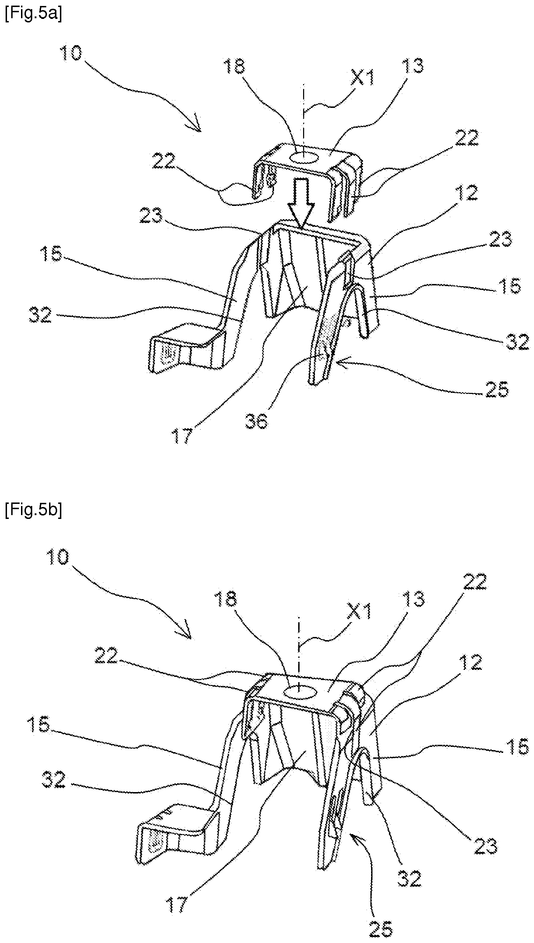

Le corps 12 du guide 10 pourra être surmoulé sur l'insert 13, tel que montré sur les figures 1, 2, 3, et 4. Dans ce cas, l'insert 13 pourra former la paroi supérieure du guide 10. En variante, l'insert 13 est fixé au corps 12 du guide 10 par sertissage, tel que montré sur les figures 5a et 5b. A cet effet, l'insert 13 est muni de griffes 22 destinées à coopérer avec des formes 23 correspondantes du corps 12.

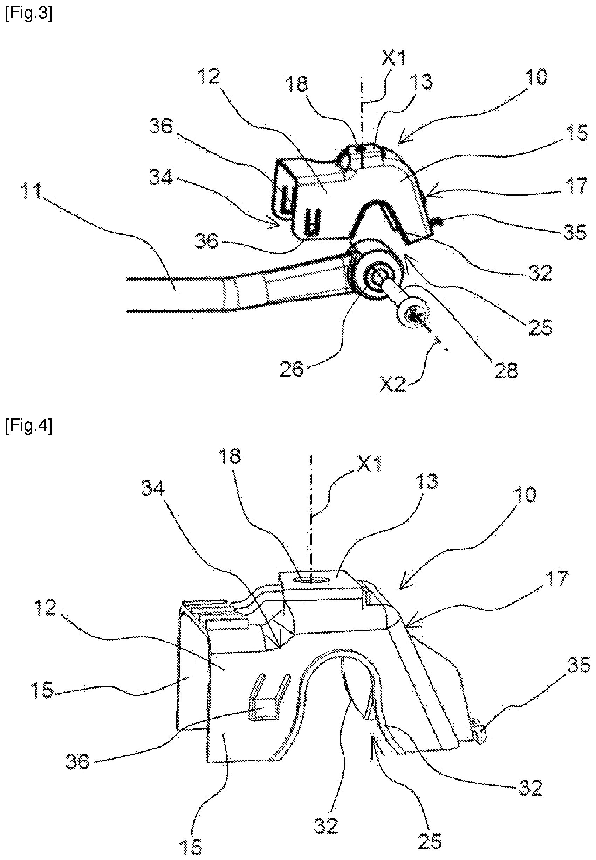

Le corps 12 en plastique comporte en outre des moyens d'indexage en position 25 de la barre Panhard 11 permettant de garantir un positionnement de l'articulation 26 de la barre 11 en regard d'une interface de fixation 30 correspondante de la pièce de soubassement 20. L'interface de fixation 30 est par exemple un écrou destiné à recevoir une vis de fixation 28 traversant l'articulation 26, tel que montré sur les figures 2 et 3.

Ces moyens d'indexage en position 25 consistent en une découpe 32 ménagée dans chaque flanc 15 et sur laquelle est destinée à venir en appui l'articulation 26 de la barre Panhard 11. Dans l'exemple représenté, la découpe 32 présente une forme évasée, notamment une forme en V. La portion la plus grande de la découpe 32 est située vers le bas afin de pouvoir compenser progressivement les dispersions dimensionnelles de montage du train.

Lorsque la barre Panhard 11 est en appui contre le fond des découpes 32 et maintenue latéralement par les bords des découpes 32, on s'assure que l'articulation 26 est située en regard de l'interface de fixation 30 de la pièce de soubassement 20. Les découpes 32 assurent ainsi une fonction de butée pour l'articulation 26 suivant l'axe vertical Z et suivant l'axe transversal Y. Il est alors possible d'insérer une vis de fixation 28 à travers l'articulation 26 pour la visser à l'intérieur de l'écrou 30 de la pièce de soubassement 20. L'axe X2 de l'articulation 26 s'étend suivant l'axe longitudinal X.

En variante, les découpes 32 pourront présenter une autre forme évasée adaptée à l'application permettant d'indexer en position l'articulation 26 de la barre 11 par rapport à l'interface de fixation 30 correspondante de la pièce de soubassement 20.

Comme on peut le voir clairement sur les figures 2 et 3, le guide 10 comporte également des moyens de pré-maintien 34 sur la pièce de soubassement 20. Les moyens de pré-maintien 34 comportent en l'occurrence un ergot de positionnement 35 disposé à une extrémité du guide 10 ainsi qu'une patte d'encliquetage 36 disposée sur un flanc 15 du guide 10. En variante, les moyens de pré-maintien 34 comportent un seul de ces deux éléments 35 ou 36.

Lors d'une phase de montage, la caisse du véhicule vient coiffer le train arrière puis les bras du train sont fixés à la caisse du véhicule automobile.

Le guide 10 est mis en place à l'aide des moyens de pré-maintien 34 en faisant coopérer l'ergot 35 avec un trou de réception 37 correspondant de la pièce de soubassement 20, tel que montré sur la figure 2. Le guide 10 est ensuite pivoté de telle façon que la patte d'encliquetage 36 coopère avec une forme correspondante 38 ménagée dans la pièce de soubassement 20 afin de permettre de maintenir en position le guide 10 à l'intérieur de la pièce de soubassement 20.

Le guide 10 est ensuite fixé à la pièce de soubassement 20 au moyen de la vis de fixation 19 qui traverse l'ouverture 18 de l'insert 13 afin de coopérer avec l'écrou 21 correspondant disposé sur la face supérieure de la pièce de soubassement 20.

La barre Panhard 11 sur le véhicule est disposée à l'intérieur des découpes 32 par un mouvement allant de bas en haut, de façon à compenser les dispersions dimensionnelles de montage du train. Une fois la barre Panhard 11 en appui contre le fond des découpes 32, l'articulation 26 se situe en regard de l'écrou 30 intégré à la pièce de soubassement 20. La vis de fixation 28 peut alors être insérée à l'intérieur d'un trou de l'articulation 26 pour coopérer avec l'écrou 30.

L'invention concerne en outre un véhicule automobile comportant un ensemble tel que précédemment décrit.

## Revendications

1. Guide de montage (10) pour une barre Panhard (11), **caractérisé en ce qu'**il comporte:
- un corps (12) réalisé dans un matériau plastique ouvert en partie inférieure pour le passage de la barre Panhard (11), ledit corps (12) étant muni de moyens d'indexage en position (25) de la barre Panhard (11), et
- un insert (13) réalisé dans un matériau métallique disposé dans la partie supérieure du corps (12), ledit insert (13) comportant une ouverture traversante (18) pour le passage d'un organe de fixation (19) destiné à assurer une fixation du guide (10) sur une pièce structurelle de soubassement (20) de véhicule automobile.

2. Guide de montage selon la revendication 1, **caractérisé en ce que** le corps (12) est surmoulé sur l'insert (13).

3. Guide de montage selon la revendication 1, **caractérisé en ce que** l'insert (13) est serti sur le corps (12).

4. Guide de montage selon l'une quelconque des revendications 1 à 3, **caractérisé en ce que** les moyens d'indexage en position (25) comportent une découpe (32) ménagée dans un flanc (15) correspondant du corps (12) sur laquelle est destinée à venir en appui une articulation de la barre Panhard (11).

5. Guide de montage selon la revendication 4, **caractérisé en ce que** la découpe (32) présente une forme évasée.

6. Guide de montage selon l'une quelconque des revendications 1 à 5, **caractérisé en ce qu'**il comporte des moyens de pré-maintien (34) sur la pièce structurelle de soubassement (20).

7. Guide de montage selon la revendication 6, **caractérisé en ce que** les moyens de pré-maintien (34) comportent un ergot de positionnement (35) et/ou une patte d'encliquetage (36).

8. Ensemble pour véhicule automobile, **caractérisé en ce qu'**il comporte:
- une barre Panhard (11),
- une pièce structurelle de soubassement (20), et
- un guide de montage (10) tel que défini selon l'une quelconque des revendications précédente fixé sur la pièce structurelle de soubassement (20).

9. Véhicule automobile comportant un ensemble tel que défini dans la revendication 8.

## Patentansprüche

1. Montageführung (10) für eine Panhard-Stange (11), **dadurch gekennzeichnet, dass** sie folgendes aufweist:
- einem Körper (12) aus einem im unteren Teil offenen Kunststoffmaterial für den Durchgang der Panhard-Stange (11), wobei der Körper (12) mit Positionsindexiermitteln (25) der Panhard-Stange (11) versehen ist, und
- einen Einsatz (13) aus einem metallischen Material, der im oberen Teil des Körpers (12) angeordnet ist, wobei der Einsatz (13) eine Durchgangsöffnung (18) für den Durchgang eines Befestigungselementes (19) zum Befestigen der Führung (10) an einem Untergestellbauteil (20) eines Kraftfahrzeugs aufweist.

2. Montageführung nach Anspruch 1, **dadurch gekennzeichnet, dass** der Körper (12) an den Einsatz (13) angeformt ist.

3. Montageführung nach Anspruch 1, **dadurch gekennzeichnet, dass** der Einsatz (13) auf den Körper (12) aufgestanzt ist.

4. Montageführung nach einem der Ansprüche 1 bis 3, **dadurch gekennzeichnet, dass** die Positionsindexierungsmittel (25) einen Ausschnitt (32) aufweisen, der in einer entsprechenden Flanke (15) des Körpers (12) ausgebildet ist, auf der ein Gelenk der Panhard-Stange (11) zur Anlage kommen soll.

5. Montageführung nach Anspruch 4, **dadurch gekennzeichnet, dass** der Ausschnitt (32) eine aufgeweitete Form aufweist.

6. Montageführung nach einem der Ansprüche 1 bis 5, **dadurch gekennzeichnet, dass** sie Vorhaltemittel (34) auf dem strukturellen Unterlageteil (20) aufweist.

7. Montageführung nach Anspruch 6, **dadurch gekennzeichnet, dass** die Vorhaltemittel (34) eine Positioniernase (35) und/oder eine Rastnase (36) aufweisen.

8. Einheit für ein Kraftfahrzeug, **dadurch gekennzeichnet, dass** sie folgendes aufweist:
- einem Panhard-Balken (11),
- ein Stück strukturell von Unterbau (20) und
- eine Montageführung (10) nach einem der vorhergehenden Ansprüche, die an dem Unterbau-Strukturteil (20) befestigt ist.

9. Kraftfahrzeug mit einer Anordnung nach Anspruch 8.

## Claims

1. Mounting guide (10) for a Panhard bar (11), **characterized in that** it comprises:
- a body (12) made of a plastic material open in the lower part for the passage of the Panhard bar (11), said body (12) being provided with means for indexing the Panhard bar (11) in position (25), and
- an insert (13) made of a metal material arranged in the upper part of the body (12), said insert (13) comprising a through opening (18) for the passage of a fixing member (19) intended to ensure a fixing of the guide (10) on a structural underframe part (20) of a motor vehicle.

2. Mounting guide according to Claim 1, **characterized in that** the body (12) is overmolded on the insert (13).

3. Mounting guide according to Claim 1, **characterized in that** the insert (13) is crimped onto the body (12).

4. Mounting guide according to any one of Claims 1 to 3, **characterized in that** the position-indexing means (25) comprise a cutout (32) formed in a corresponding flank (15) of the body (12) on which is intended to bear an articulation of the Panhard bar (11).

5. Mounting guide according to Claim 4, **characterized in that** the cut-out (32) has a flared shape.

6. Mounting guide according to any one of Claims 1 to 5, **characterized in that** it comprises pre-holding means (34) on the structural underbody part (20).

7. Mounting guide according to Claim 6, **characterized in that** the pre-holding means (34) comprise a positioning lug (35) and/or a snap-fastening lug (36).

8. Assembly for a motor vehicle, **characterized in that** it comprises:
- a Panhard bar (11),
- a room structural of base (20), and
mounting guide (10) as defined according to any one of the preceding claims fixed to the structural underbody part (20).

9. Motor vehicle comprising an assembly as defined in claim 8.
